Europäisches Patentamt

European Patent Office

Office européen des brevets

(11) Publication number: **0 176 036 B1**

# EUROPEAN PATENT SPECIFICATION

(45) Date of publication of patent specification: **14.02.90**

(21) Application number: **85111844.8**

(22) Date of filing: **19.09.85**

(51) Int. Cl.⁵: **C 25 C 3/12, C 04 B 35/52**

(54) **Method of producing carbonaceous bodies.**

(30) Priority: **28.09.84 IT 2291584**

(43) Date of publication of application:
**02.04.86 Bulletin 86/14**

(45) Publication of the grant of the patent:
**14.02.90 Bulletin 90/07**

(84) Designated Contracting States:
**AT CH DE FR GB IT LI NL SE**

(56) References cited:
**EP-A-0 103 130**
**DE-A-2 630 396**
**DE-A-3 042 708**
**GB-A-2 020 638**
**US-A-3 578 069**

(73) Proprietor: **ALUSUISSE ITALIA S.p.A.**
**Via Vittor Pisani, 31**
**I-20124 Milano (IT)**

(73) Proprietor: **ITALIMPIANTI Società Italiana**
**Impianti p.a.**
**Piazza Piccapietra, 9**
**I-16121 Genova (IT)**

(73) Proprietor: **SIRMA S.p.A.**
**Via Della Chimica 4**
**I-30033 Malcontenta (Venezia) (IT)**

(72) Inventor: **Corato, Renzo**
**Via T. Tasso, 23**
**I-98100 Mestre (IT)**
Inventor: **Ganapini, Giulio**
**Via G. Bettolo, 33**
**I-16166 Genova (IT)**
Inventor: **Meier, Hans-Anton**
**Via Berinetti, 1**
**Milano (IT)**
Inventor: **Poggi, Mauro**
**Via Montallegro, 15/6**
**I-16145 Genova (IT)**
Inventor: **Rosso, Antonio**
**Cannaregio, 3451**
**I-30121 Venezia (IT)**
Inventor: **Sanchioni, Sergio**
**Via Fradeletto, 14**
**I-98100 Mestre (IT)**

Courier Press, Leamington Spa, England.

**EP  0 176 036  B1**

(74) Representative: **Modiano, Guido et al
MODIANO, JOSIF, PISANTY & STAUB Modiano
& Associati Via Meravigli, 16
I-20123 Milano (IT)**

## Description

The invention relates to a method of producing carbonaceous bodies, in particular electrodes, such as anodes of parallelepipedal, cubic, or cylindrical shape for producing aluminum or steel, by calcining raw shaped bodies containing pyrolyzable substances, in an oxidizing medium within a tunnel type furnace wherein the distillation products, e.g. volatile organics issuing in the temperature range of 200° to 600°C and gaseous decomposition products or particulates are completely burned off.

Carbonaceous bodies are produced, in general, from a mass of petroleum coke, anthracite, carbon black, graphite, or the like, which are added with a binder, such as, for example, tar and/or pitch. As shaped bodies of such types are being fired, the binder is coked, thus yielding desired mechanical and electrical characteristics.

The description which follows will make specific reference to the method as employed to obtain electrodes for aluminum production, it being understood that the same method may also be applied, with appropriate modifications, to the formation of electrodes for steel production.

Anodes for the production of aluminum are mainly calcined, nowadays, in annular open chamber furnaces where they are stacked in layers comprising 6 to 8 anodes. Compared to the annular chamber furnaces of that type, tunnel type furnaces, as disclosed for example in published patents DE—OS 3042708 and EP—OS 0103130, afford the following advantages:

improved reproducibility of the calcining conditions,

improved hygiene of the work area, and

possibility for thermal recovery.

Tunnel type furnaces for anodes for the production of aluminum are comprised, in principle, of four zones: a pre-heating zone (temperatures of the carbonaceous bodies up to about 200°C), a combustion zone (temperatures of the carbonaceous bodies up to about 600°C), a firing zone (temperature of the carbonaceous bodies of about 1000—1200°C), and a cooling zone.

In the calcining process with tunnel type furnaces, a number of trucks loaded with raw carbonaceous bodies are pushed into such furnaces at a speed generally in the range of 0.5 to 3 meters per hour. The shaped bodies are preferably contained in muffles placed on the trucks and, preferably, embedded in a powder filler containing carbon for protection against oxidation and deformation.

The trucks are pushed through the furnace in conformity with a set temperature pattern, also called firing curve. The temperature pattern, or respectively, the heating rate resulting therefrom, is a decisive process parameter for the production of high quality fired electrodes. Once the firing curve of a tunnel type furnace is set, all the carbonaceous bodies are calcined in the same way, thereby a high degree of reproducibility is achieved. The trucks pushed through the tunnel type furnace may have, for example, a bottom surface measuring 5×4 meters. The trucks may carry one or more layers of the carbonaceous bodies.

Calcining carbonaceous bodies in tunnel type furnaces presents a problem which is seldom observed or quite absent with annular chamber furnaces, i.e. the formation of cracks. This is to be attributed to physical and chemical changes occurring in the binders during calcination. There may be found two critical phases which are of decisive import to the formation of cracks and take place at two different temperature ranges:

the first critical phase is met between the softening temperature of the binder, and about 200°C, where pitch is employed, in particular between 130°C and 180°C. In this temperature range, pitch becomes liquid. The carbonaceous body has a mechanical structure which weakens and cannot withstand the release of internal stresses.

The second critical phase is met in the approximate range of 350°C to 550°C. During this phase, the binder is coked, while releasing at the same time volatile organics; in the instance of pitch being used, inter alia also polycyclic aromatics which may be harmful to humans. Also in this case, a weakened mechanical structure of the carbonaceous body exists which can not always withstand expansion and contraction.

In U.S. Patent No. US—PS 4185055, an attempt is made to explain and describe the cracking phenomenon. The solution is seen in setting an exact firing curve for a furnace operating in a reducing medium or atmosphere. However, besides the reducing medium requiring purification of the burned gases, and accordingly, raising costs enormously, the fired carbonaceous bodies fail to meet all the requirements as regards the elimination of cracks.

In view of the above situation, the inventors have set for themselves the task of providing a method of manufacturing carbonaceous bodies which can yield crack-free shaped bodies at decreased costs and with high reproducibility, and involves no purification of the burned gases.

This task is accomplished by a method of producing crack-free carbonaceous bodies, in particular electrodes of parallelepipedal, cubic, or cylindrical shape for the electrolysis of aluminum by calcining raw shaped carbonaceous bodies containing a pyrolyzable binder in a tunnel type furnace, characterized in that evenly distributed weight of at least 70 Kgw/m² (686 Pa), is applied on the covering surface(s) of the carbonaceous bodies (12), while heating said bodies at least in the temperature range up to 200°C wherein said binder undergoes softening.

With parallelepipedic carbonaceous bodies of elongate shape, crack formation can be prevented, according to the invention, by holding the shaped bodies upright at least until the binder has fully softened within the carbonaceous body. By virtue of the elongate design of the carbonaceous body, crack formation is prevented by gravity action i.e. by the same weight of the uprightly arranged bodies if the maximum heating rate or temperature gradients specified herein below are maintained. In all cases, the longitudinal sides of this carbonaceous body, as set upright, should be much longer than their short sides.

During heat application up to about 200°C, the heating rate or temperature gradient reaches preferably a maximum of 10°C per hour, in particular of about 4° to 6°C per hour, while the subsequent heating to about 600°C corresponds preferably to a maximum of 50°C per hour, in particular of about 20 to 30°C per hour.

Furthermore, actual tests have shown that where several layers of raw carbonaceous bodies are superimposed on one another, only the top one need be loaded with a special weight. The lower carbonaceous bodies are loaded with the weight of the overlying body, or bodies, which is effective to prevent the insurgence of cracks.

While the covering surface of carbonaceous bodies laid in a single layer, or covering surface of the uppermost carbonaceous body in a multiple layer arrangement, may be also loaded with a heavy weight, this is avoided for economical reasons. A lower limit of 686 Pa has proved adequate. Preferably, however, one would operate with an evenly distributed weight in the range of 980 to 2744 Pa on the covering surfaces of the carbonaceous bodies.

In the manufacture of electrodes, preferably, a single layer of raw shaped bodies is placed on the trucks. This is specially advantageous because the exchange of heat during the heating and cooling steps alike, takes place at a fast rate.

In principle, the weights may be at least in part removed at a temperature above 200°C, the decisive phenomena to the formation of cracks occurring below this temperature level. Typical tunnel type furnaaces may be designed such that the weights can be removed after the heating zone (up to about 200°C). However, the weights may also be removed, without problems, even at a later stage, or may be left there until the calcining process is completed.

In practice, tunnel type furnaces are advantageously designed to afford separate implementation of the pre-heating furnace. Thus, the plate weights can be removed long after the trucks loaded with the carbonaceous bodies have left the pre-heating tunnel. Variations including preheating furnaces which utilize the flue gases of a calcining furnace placed at a downstream location afford, in particular, energy savings.

The plate weights used in accordance with this invention are expediently formed from a refractory ceramic material resistant to corrosion, and have a thickness, for example, of 2—15 centimeters, preferably of about 10 cm. In an industrial application, particularly satisfactory have proved to be materials containing silicon oxide and/or aluminum oxide, as well as silicon carbide or compounds thereof. Expediently, the plate weights have the same horizontal surface area as the carbonaceous bodies being calcined. As is usual with prior methods, the raw carbonaceous bodies may be covered with a powder filler effective to prevent oxidation, generally containing carbon, e.g. metallurgic coke, petroleum coke, or anthracite. This covering is, in turn, covered with the plate weights. The determining load is calculated from the weights of the plates and the covering.

The plate weights may also be placed directly onto the raw carbonaceous body and be then covered with the powder filler. In this case, preferably thin cover plates having a small weight are placed on the covering to restrict combustion of the powder filler. Thus, the load on the carbonaceous bodies would be given by the combined weights of the plate weights, covering, and cover plates.

For the implementation of the inventive method, it is of no substantial importance whether the carbonaceous bodies to be calcined are or not packed in a box. If a box is used, the powder filler may be placed into an interspice formed by porous ceramic plates, and the raw carbonaceous bodies may be placed into the box such that they are held away from the powder filler. The plate weights would be placed directly onto the carbonaceous bodies. A cavity would be left between the shaped bodies and the box, laterally and/or at the top.

In a further preferred embodiment of the invention, over the raw shaped bodies there is applied a protection layer containing $Al_2O_3$ and/or $SiO_2$. In addition to the refractory oxides, this "paint" comprises, for example, borates and/or phosphates and/or alkaline salts. The layer is pervious, up to about 600°C, to the volatile organic distillation products issuing from the binder and to the decomposition, gaseous or particulate, products, but not to the oxidizing medium. In the high temperature range, the protective layer is vitrified and becomes impervious in both directions. Where a protective layer is employed, both a box and the powder filler may be omitted.

The invention will be further explained next with reference to the accompanying drawings, the vertical sectional views whereof show diagrammatically examples from the manufacture of anodes for the aluminum industry modified as follows:

Figure 1 shows anodes packed in powder filler with plate weights;

Figure 2 shows anodes with plate weights placed directly thereon;

Figure 3 shows anodes packed in powder filler, but without plate weights;

Figure 4 shows two layers of anodes placed the one directly onto the other and packed in powder filler;

Figure 5 shows anodes with plate weights placed directly thereon, in a small box; and

Figure 6 shows anodes with plate weights placed directly thereon, in a large box.

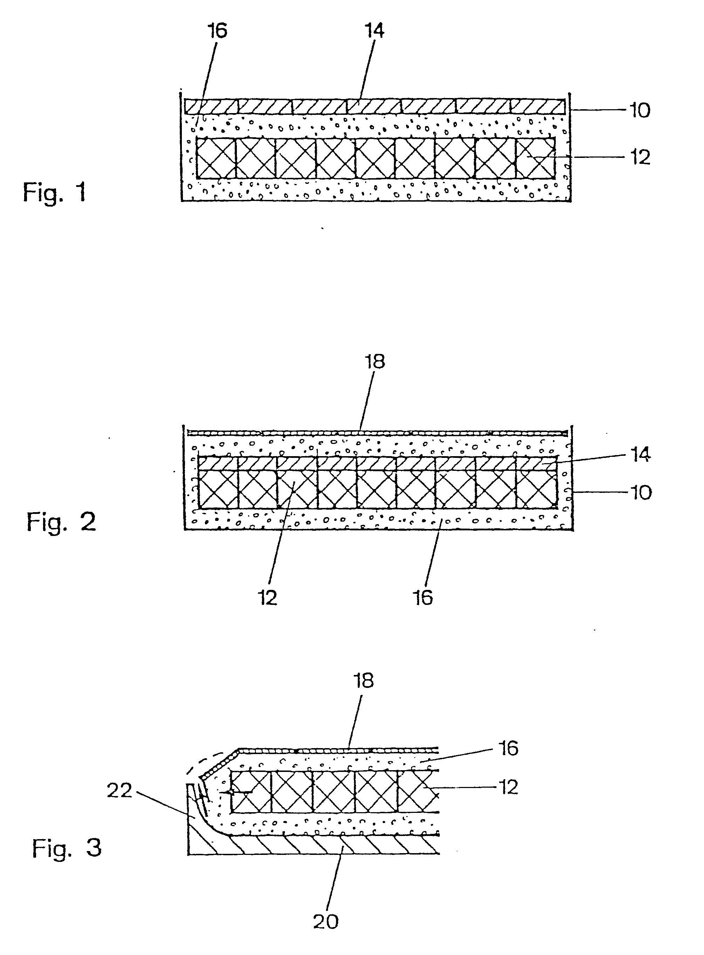

Figure 1 of the drawings shows a box 10 filled with powder filler 16, wherein the anodes 12 are immersed. Over the powder filler 16, there is arranged a horizontal layer of plate weights 14. The weight load on the covering surface of the carbonaceous bodies 12 varies from 980 to 3920 Pa, where 294—1960 Pa are formed from the powder filler overlying the carbon bodies, and 686—1960 Pa from the plate weights.

In Figure 2, the plate weights 14 are shown laid directly on the carbonaceous bodies 12. The powder filler 16 which surrounds the bodies 12 is poured onto the plate weights 14 and covered, in turn, with lightweight ceramic covering plates 18, which prevent entrainment and/or combustion of the powder filler 16. The weight load on the covering surfaces of the carbonaceous bodies 12 is 686—2744 Pa and has the following composition:

    plate weights—294—1470 Pa,
    powder filler—294—980 Pa, and
    lightweight covering plates—98—294 Pa.

In the embodiment of Figure 3, the carbonaceous bodies 12 are not introduced into a box but laid onto powder filler spread over a bottom plate 20 having a laterally raised edge 22. The carbonaceous bodies 12 are, in turn, covered with a relatively deep layer of the powder filler 16. The side edge 22 stops the powder filler 16 from falling out of the truck, while permitting of some flowing thereof. The powder filler is protected, in turn, by thin covering plates 18. The weight load of 1560—3920 Pa on the covering surface of the carbon bodies 12 is constituted by the following two components:

    powder filler—1372—3626 Pa, and
    thin covering plates—98—294 Pa.

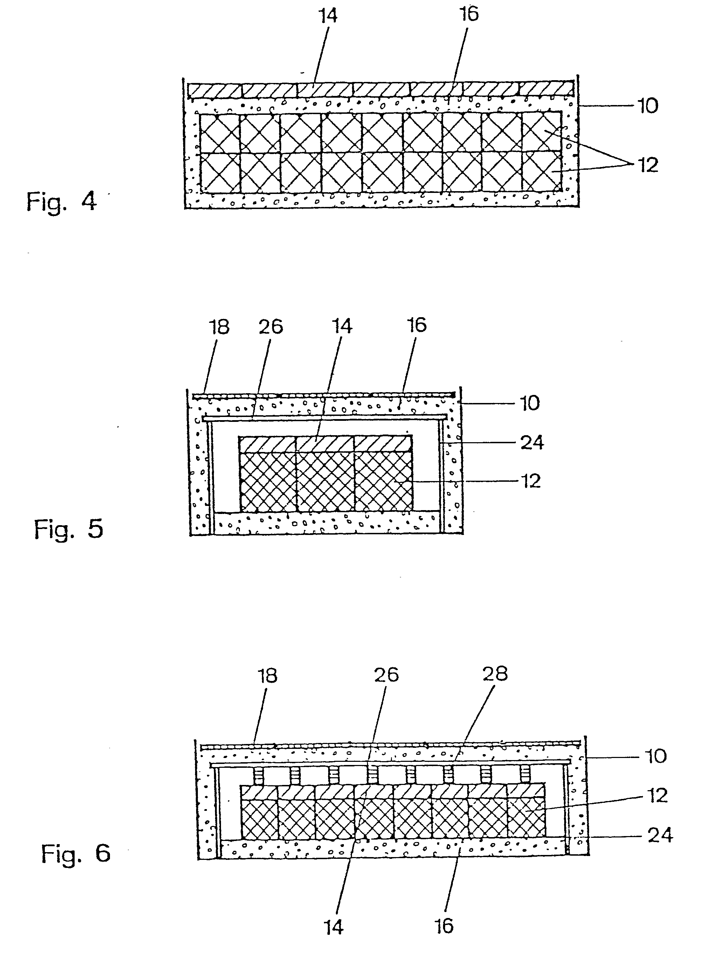

As shown in Figure 4, two directly superimposed horizontal layers of carbonaceous bodies 12 are packed in powder filler 16 within a box 10. The plate weights 14 are placed at the top, and no covering plates are required. On the covering surface of the top layer of the carbonaceous bodies 12, there is placed the same weight per unit area as in Figure 1. The bottom layer of the carbonaceous bodies 12 is also loaded with the weight of the top layer. After calcining, both layers of the carbonaceous bodies exhibit the same quality level and are crack-free.

Figures 5 and 6, differently from the embodiments illustrated thus far, show examples where the carbonaceous bodies 12 are not in direct contact, at least not laterally, with the powder filler 16. Thus, during calcining, the thermal expansion of the carbonaceous bodies 12 is left undisturbed. In a box 10, there are arranged porous supporting walls 24 of a ceramic material which are filled with powder filler 16. On the bodies 12 are placed plate weights 14. At a distance from the plate weights, a ceramic cover 26 carries the powder filler 16, which is protected, in turn, by covering plates 18.

In Figure 6 there is shown a box 10 of a larger size which is constructed as shown in Figure 5. In Figure 6, however, on the covering surface of the carbonaceous bodies 12 there acts an additional weight because the covering or floor 26 acts on the plate weights 14 via supporting sectional members 28.

A further embodiment, not shown in the drawing, consists of lowering the floor 26 until it is brought to bear directly on the outer sides of the plates 14. In this case, the supports 28 may be omitted, as may the plates 26 from the middle.

This invention affords the following advantages:

the volatile substances from the distillation of tar and/or pitch are completely burned because one would operate in an oxidizing medium, which eliminates all the hazards of explosion;

where the carbonaceous bodies are packed with powder fillers, standard formulations may be used for their manufacture: e.g. the pitch percentage need not be reduced;

the expansion of the carbonaceous bodies during the calcining process may be controlled; and

mechanical stresses only occur to a reduced extent in the finished carbonaceous blocks.

## Claims

1. A method of producing crack-free carbonaceous bodies, in particular electrodes of parallelepipedal, cubic, or cylindrical shape for the electrolysis of aluminum by calcining raw shaped carbonaceous bodies containing a pyrolyzable binder in a tunnel type furnace, characterized in that evenly distributed weight of at least 70 Kgw/m$^2$ (686 Pa), is applied on the covering surface(s) of the carbonaceous bodies (12), while heating said bodies approximately in the temperature range up to 200°C wherein said binder undergoes softening.

2. A method according to claim 1 characterized in that the evenly distributed weight applied ranges from 100 to 280 Kgw/m$^2$ (980 to 2744 Pa).

3. A method according to claim 1, characterized in that the carbonaceous bodies (12) are heated up to 200°C with a maximum heating rate of 10°C per hour, and in that they are subsequently heated in the tunnel furnace up to 600°C at a maximum heating rate of 50°C per hour.

4. A method according to claim 3 characterized in that the carbonaceous bodies are heated up to 200°C at a heating rate of 4° to 6°C per hour.

5. A method according to claim 3 characterized in that the carbonaceous bodies are heated in the subsequent heating step up to 600°C at a heating rate of 20° to 30°C per hour.

6. A method according to claim 1 characterized in that heating up to 200°C under said weight is carried out in a separate pre-heating furnace and thereafter said weight is at least partly removed.

7. A method according to anyone of claims 1 to 6 characterized in that said weight is applied in the form of refractory and corrosion-resistant plate weights (14) of a ceramic material.

8. A method according to claim 7 characterized in that said plate weights comprise SiC, Al₂O₃, SiO₂ or combinations thereof.

9. A method according to claim 7 characterized in that said carbonaceous bodies (12) are covered with a powder filler (16), and said plate weights are placed over said powder filler.

10. A method according to claim 7 characterized in that said plate weights (14) are placed directly onto said carbonaceous bodies (12), and are covered by pouring powder filler (16) thereon.

11. A method according to either claim 9 or 10, characterized in that the raw carbonaceous bodies (12), the plate weights (14), and the powder filler are introduced into a box (10) made of a refractory and corrosion-resistant ceramic material before submitting them to said heating.

12. A method according to claim 11 characterized in that said box (10) comprises an interspace formed between at least part of its walls and a refractory and corrosion-resistant ceramic material arranged inward and spaced apart from said walls, said interspace is filled with said powder filler (16), and said raw carbonaceous bodies loaded with said plate weights (14) are introduced in said box spaced apart from at least part of said ceramic material innerly delimitating said interspace.

13. A method according to claim 7 characterized in that a protective layer containing Al₂O₃ and/or SiO₂ is applied over a raw shaped body (12).

**Patentansprüche**

1. Verfahren zur Herstellung von rißfreien kohlenstoffhaltigen Körpern, insbesondere Elektroden von parallelepipedischer, kubischer oder zylindrischer Form für die Elektrolyse von Alluminium, durch Kalzinieren von ein Pyrolyzierbares Bindemittel enthaltenden, kohlenstoffhaltigen geformten Rohrkörpern in einem Tunnelofen, dadurch gekennzeichnet, daß ein gleichmäßig verteiltes Gewpvht von wenigstens 70 Kgw/m² (686 Pa) auf die Abdeckfläche (n) der kohlenstoffhaltigen Körper (12) angewendet wird, während die genannten Körper annähernd im Temperaturbereich bis 200°C, in dem das Bindemittel erweicht wird, erhitzt werden.

2. Verfahren nach Anspruch 1, dadurch gekennzeichnet, daß das gleichmäßig verteilte, angewendete Gewicht im Bereich von 100 bis 280 Kgw/m² (980 bis 2744 Pa) liegt.

3. Verfahren nach Anspruch 1, dadurch gekennzeichnet, daß die kohlenstoffhältigen KÖrper (12) auf 200°C bei einer maximalen Erhitzungsgeschwindigkeit von 10°C pro Stunde erhitzt werden und daß die sodann im Tunnelofen auf 600°C bei einer maximalen Erhitzungsgeschwindigkeit von 50°C pro Stunde erhitzt werden.

4. Verfahren nach Anspruch 3, dadurch gekennzeichnet, daß die kohlenstoffhaltigen Körper auf 200°C bei einer Erhitzungsgeschwindigkeit von 4 bis 6°C pro Stunde erhitzt werden.

5. Verfahren nach Anspruch 3, dadurch gekennzeichnet, daß die kohlenstoffhaltigen Körper in der nachfolgenden Erhitzungsstufe auf 600°C bei einer Erhitzungsgeschwindigkeit von 20 bis 30°C pro Stunde erhitzt werden.

6. Verfahren nach Anspruch 1, dadurch gekennzeichnet, daß das Erhitzen auf 200°C unter dem genannten Gewicht in einer getrennten Vorerhitzungsofen durchgeführt wird und sodann das Gewicht zumindest teilweise entfernt wird.

7. Verfahren nach einem der Ansprüche 1 bis 6, dadurch gekennzeichnet, daß das Gewicht in Form von hitzefesten und korrosionsbeständigen Plattengewichten (14) aus einem keramischen Material angewendet wird.

8. Verfahren nach Anspruch 7, dadurch gekennzeichnet, daß die Plattengewichte aus SiC, Al₂O₃, SiO₂ oder Kombinationen hiervon bestehen.

9. Verfahren nach Anspruch 7, dadurch gekennzeichnet, daß die kohlenstoffhaltigen Körper (12) mit einem Füllstoffpulver (16) bedeckt sind und die Plattengewichte über dem Füllstoffpulver angeordnet sind.

10. Verfahren nach Anspruch 7, dadurch gekennzeichnet, daß die Plattengewichte (14) direkt auf den kohlenstoffhaltigen Körpern (12) angeordnet und durch Aufschütten von Füllstoffpulver (16) bedeckt sind.

11. Verfahren nach Anspruch 9 oder 10, dadurch gekennzeichnet, daß die kohlenstoffhaltigen Rohrkörper (12), die Plattengewichte (14) und das Füllstoffpulver, bevor sie der Erhitzung ausgesetzt werden, in einen Kasten (10) eingebracht werden, der aus hitzefestem und korrosionsbeständigem Keramikmaterial besteht.

12. Verfahren nach Anspruch 11, dadurch gekennzeichnet, daß der Kasten (10) einen Zwischenraum aufweist, der zwischen wenigstens einem Teil seiner Wände und einem innen und im Abstand von den genannten Wänden angeordneten, hitzefesten und korrosionsbeständigen Keramikmaterial ausgebildet ist, wobei der Zwischenraum mit dem genannten Füllstoffpulver (16) ausgefüllt wird und die mit den Plattengewichten (14) beladenen kohlenstoffhaltigen Rohkörper in den Kasten im Abstand von wenigstens einem Teil des innen den Zwischenraum begrenzenden Keramikmaterials eingebracht werden.

13. Verfahren nach Anspruch 7, dadurch gekennzeichnet, daß eine Al₂O₃ undoder SiO₂ enthaltende Schutzschicht auf eine Reihe geformter Rohkörper (12) aufgebracht wird.

**Revendications**

1. Procédé de fabrication de corps carbonés sans crique, en particulier d'électrodes de forme parallélépipédique, cubique ou cylindrique destinées à l'électrolyse de l'aluminium, qui consiste à calciner des corps carbonés de forme brute, contenant un liant pyrolisable dans un four du type à tunnel, caractérisé en ce que un poids uniformément réparti d'au moins 70 kg p/m² (686 Pa) est appliqué sur la (les) surface(s) de couverture des corps carbonés (12), tout en chauffant lesdits corps à une température pouvant atteindre environ 200°C, ce qui entraîne le ramollissement dudit liant.

2. Procédé selon la revendication 1 caractérisé en ce que le poids réparti uniformément exerce une charge de 100 à 280 kg p/m² (980 à 2.744 Pa).

3. Procédé selon la revendication 1, caractérisé en ce que les corps carbonés (12) sont chauffés jusqu'à une température de 200°C, avec une vitesse maximale d'accroissement de température de 10°C par heure et en ce qu'ils sont chauffés ensuite dans le four à tunnel jusqu'à 600°C avec une vitesse maximale d'accroissement de température de 50°C par heure.

4. Procédé selon la revendication 3, caractérisé en ce que les corps carbonés sont chauffés jusqu'à une température de 200°C avec une vitesse maximale d'accroissement de température de 4° à 6°C par heure.

5. Procédé selon la revendication 3, caractérisé en ce que les corps carbonés sont chauffés au cours de l'étape subséquente jusqu'à une température de 600°C avec une vitesse d'accroissement de température de 20° à 30°C par heure.

6. Procédé selon la revendication 1, caractérisé en ce que le chauffage jusqu'à une température de 200°C sous ledit poids est effectué dans un four de pré-chauffage séparé et que ledit poids est ensuite enlevé partiellement.

7. Procédé selon l'une quelconque des revendications 1 à 6, caractérisé en ce que ledit poids est appliqué sous la forme de poids en plaques (14) réfractaires et résistant à la corrosion en un matériau céramique.

8. Procédé selon la revendication 7, caractérisé en ce que lesdits poids en plaques comportent du SiC, du Al₂O₃, du SiO₂ ou une combinaison de ces substances.

9. Procédé selon la revendication 7, caractérisé en ce que lesdits corps carbonés (12) sont recouverts d'une charge en poudre (16) et en ce que lesdits poids en plaques sont placés au-dessus de ladite charge en poudre.

10. Procédé selon la revendication 7, caractérisé en ce que lesdits poids en plaques (14) sont placés directement au-dessus desdits corps carbonés (12) et sont recouverts par versement d'une charge en poudre (16).

11. Procédé selon l'une quelconque des revendications 9 ou 10, caractérisé en ce que les corps carbonés (12) bruts, les poids en plaques (14) et la charge en poudre sont introduits dans un réceptacle (10) en matériau en céramique réfractaire et résistant à la corrosion avant de les soumettre audit chauffage.

12. Procédé selon la revendication 11, caractérisé en ce que ledit réceptacle (10) comporte un espace ménagé entre au moins une partie de ses parois et un matériau céramique réfractaire et résistant à la corrosion disposé vers l'intérieur et éloigné desdites parois, ledit espace étant rempli de ladite charge en poudre (16) et lesdits corps carbonés bruts supportant lesdits poids en plaques (14) étant introduits dans ledit réceptacle et éloignés d'au moins une partie dudit matériau céramique qui délimite intérieurement ledit espace.

13. Procédé selon la revendication 7, caractérisé en ce qu'une couche protectrice contenant du Al₂O₃ et/ou du SiO₂ est appliquée au-dessus d'un corps (12) de forme brute.

Fig. 1

Fig. 2

Fig. 3

Fig. 4

Fig. 5

Fig. 6

2